# EUROPÄISCHE PATENTSCHRIFT

(11) **EP 3 380 738 B1**
(45) Veröffentlichungstag und Bekanntmachung des Hinweises auf die Patenterteilung: **18.12.2019**
(21) Anmeldenummer: 16798080.4
(22) Anmeldetag: 19.10.2016
(51) Int. Cl.: F16C 33/38, F16C 19/06

(54) **KUGELLAGERKÄFIG MIT IM WESENTENLICHEN QUADRATISCHEN TASCHEN**
BALL BEARING CAGE WITH SUBSTANTIALLY QUADRATIC POCKETS
CAGE POUR ROULEMENT À BILLES AVEC ALVÉOLES ESSENTIELLEMENT CARRÉES

(30) Priorität: 25.11.2015 DE 102015223255
(43) Veröffentlichungstag der Anmeldung: 03.10.2018
(73) Patentinhaber: Schaeffler Technologies AG & Co. KG, 91074 Herzogenaurach (DE)
(72) Erfinder: NEUKIRCHNER, Jörg, 97502 Euerbach (DE); HOCK, Tobias, 97421 Schweinfurt (DE); PAUSCH, Michael, 97456 Dittelbrunn (DE)
(86) Internationale Anmeldenummer: PCT/DE2016/200478
(87) Internationale Veröffentlichungsnummer: WO 2017/088862

(56) Entgegenhaltungen:
- EP-A2- 2 031 259
- DE-U- 1 684 135
- DE-U1-202013 000 737
- GB-A- 190 911 619
- JP-A- 2008 133 894
- US-A- 1 172 858
- US-A- 3 707 753

## Beschreibung

### Gebiet der Erfindung

Die Erfindung betrifft einen zur Verwendung in einem Kugellager, insbesondere Spindellager, geeigneten Kugellagerkäfig, welcher zwei Seitenringe, die Seitenringe verbindende Stege, sowie zwischen den Stegen und den Seitenringen gebildete Wälzkörpertaschen aufweist, welche jeweils eine quadratische Grundform mit abgerundeten Ecken haben.

### Hintergrund der Erfindung

Ein aus der JP 2008 133 894 A bekannter, zylindrischer Kugellagerkäfig weist Wälzkörpertaschen auf, die die Grundform eines Rechtecks haben, dessen Ecken durch abgerundete Bereiche erweitert sind. Die Abrundung der Ecken soll mechanische Spannungen reduzieren.

Ein aus der DE 10 2004 018 868 A1 bekannter Kugellagerkäfig weist im Wesentlichen zylindrische Wälzkörpertaschen auf, welche durch vier in Radialrichtung des Kugellagerkäfigs verlaufende Rillen, die die zylindrische Grundform jeder Wälzkörpertasche in einem quadratischen Muster modifizieren, erweitert ist.

Ein weiterer Kugellagerkäfig, welcher Wälzkörpertaschen aufweist, die geometrische Merkmale zylindrischer Öffnungen mit rechteckigen Grundformen kombinieren, ist beispielsweise aus der JP 2007 170 470 A bekannt.

### Aufgabe der Erfindung

Der Erfindung liegt die Aufgabe zugrunde, einen gegenüber dem genannten Stand der Technik weiterentwickelten Kugellagerkäfig anzugeben, weicher sich durch eine besonders geringe Reibleistung und damit eine besondere Eignung für Anwendungen mit hohen Drehzahlkennwerten, insbesondere in einem Spindellager, auszeichnet.

### Beschreibung der Erfindung

Diese Aufgabe wird erfindungsgemäß gelöst durch einen Kugellagerkäfig mit den Merkmalen des Anspruchs 1. Der Kugellagerkäfig ist als Fensterkäfig mit zwei Seitenringen aufgebaut, wobei durch Stege, welche die Seitenringe vorzugsweise einstückig miteinander verbinden, Wälzkörpertaschen zur Führung jeweils einer Kugel gebildet sind. Die Grundform jeder Wälzkörpertasche ist - radial von außen in Richtung zur Mittelachse des Kugellagerkäfigs geblickt - quadratisch. Zwei gegenüberliegende Abschnitte der Seitenringe sowie zwei in Umfangsrichtung benachbarte Stege bilden hierbei die Seiten der näherungsweise quadratischen Wälzkörpertasche. Für einen im Kugellagerkäfig geführten Wälzkörper, das heißt eine Kugel, bilden die Seitenringe zusammen mit den Stegen hierbei eine Führungskontur der Wälzkörpertasche. Diese eine quadratische Grundform aufweisende Führungskontur beschreibt zwischen ihren vier Ecken jeweils eine konvexe, den Abrundungen in den Ecken entgegen gerichtete Seitenkontur. Die Charakterisierung der Seitenkontur als konvex bezieht sich dabei auf den im Wesentlichen länglichen Steg beziehungsweise Abschnitt eines Seitenrings, welcher die Wälzkörpertasche begrenzt. Der Steg beziehungsweise der Abschnitt des Seitenrings ist, radial von außen auf den Kugellagerkäfig gesehen, zwischen den Eckabrundungen der Wälzkörpertasche nach außen, das heißt konvex, gewölbt, so dass die Wälzkörpertasche an der betreffenden Stelle eine Wölbung nach innen aufweist. Im Gegensatz hierzu stellen die Eckabrundungen Wölbungen der Wäizkörpertasche nach außen dar. Eine umlaufende Randkontur der Wälzkörpertasche weist somit jeweils vier konkave und vier konvexe Abschnitte auf.

Ein in die Wälzkörpertasche eingelegter Wälzkörper wird durch die Führungskontur der Wälzkörpertasche an vier Stellen, nämlich in beiden Umfangsrichtungen sowie in beiden axialen Richtungen des Wälzlagers, abgestützt. Jede Abstützung ist dabei nur punktuell oder höchstens linienförmig ausgebildet, wobei sich die betreffende Linie im Wesentlichen in Radialrichtung des Kugellagerkäfigs erstreckt. Hierdurch ist eine besonders reibungsarme Führung des Wälzkörpers gegeben. Gleichzeitig ist durch die abgerundeten Ecken der Wälzkörpertasche ein signifikantes Schmiermittelreservoir, beispielsweise für Schmierfett, gebildet, wobei der Radius der Eckabrundungen der Wälzkörpertasche wesentlich geringer als der Wälzkörperradius ist. Der Krümmungsradius der konvexen Seitenkonturen der Wälzkörpertasche kann dagegen so groß wie der Wälzkörperradius oder sogar größer sein. Zwischen den konvexen Seitenkonturen und den Eckabrunden der Wälzkörpertasche sind vorzugsweise kantenfreie Übergänge gegeben.

Die Stege, welche jeweils zwei konvexe Seitenkonturen beschreiben, die in Umfangsrichtung benachbarte Wälzkörpertaschen begrenzen, erstrecken sich in bevorzugter Ausgestaltung in Radialrichtung weiter nach innen, das heißt zur Rotationsachse des Kugellagerkäfigs hin, als die beiden Seitenringe. Insgesamt, insbesondere durch die von den Seitenringen aus nach innen gezogenen Stege, verjüngt sich jede Wälzkörpertasche vorzugsweise radial von außen nach innen. Dementsprechend können sich Führungskonturen, welche den Wälzkörper in Umfangsrichtung des Kugellagers abstützen, in Radialrichtung des Kugellagers über einen weiteren Bereich erstrecken als diejenigen Führungskonturen, die eine Abstützung in Axialrichtung des Kugellagers darstellen. Die Abstützung des Kugellagerkäfigs durch die Wälzkörper erfolgt vorzugsweise zum überwiegenden Teil oder ausschließlich durch die Stege, was die Radialrichtung betrifft. Hierbei sind durch zwei in Umfangsrichtung benachbarte Stege Haltevorsprünge einer Wälzkörpertasche gebildet, welche näher an der Rotationsachse des Kugellagerkäfigs angeordnet sind als die Führungskonturen, die Axialkräfte zwischen Wälzkörpern und Kugellagerkäfig übertragen und der quadratischen Grundform der Wälzkörpertasche zuzurechnen sind.

Die in Radialrichtung des Kugellagerkäfigs gemessene Höhe eines Steges beträgt vorzugsweise mindestens das 1,5 fache und höchstens das 2,5 fache, insbesondere mindestens das Doppelte, der in derselben Richtung gemessenen Höhe der Seitenringe. Die in Axialrichtung des Kugellagerkäfig gemessene Breite des Steges nimmt dagegen vorzugsweise radial von außen nach innen ab. Hierbei beträgt die Breite des Steges an dessen innerem Rand vorzugsweise maximal ein Viertel der gesamten Käfigbreite, das heißt der in Axialrichtung gemessenen Gesamtbreite des Kugellagerkäfigs. In Fällen, in denen der radial innere Rand des Käfigs - genauer: der Stege des Käfigs - eine abgerundete Kontur beschreibt, ist die in Axialrichtung gemessene Breite der Stege an deren Innenrand annähernd Null.

Die einer Wälzkörpertasche zugewandten Oberflächen zweier Stege beschreiben in vorteilhafter Ausgestaltung jeweils eine Sattelfläche, Unter einer Sattelfläche wird eine Fläche verstanden, die in beiden Hauptrichtungen entgegengesetzt, das heißt antiklastisch, gekrümmt ist. Das Gaußsche Krümmungsmaß der Sattelfläche ist negativ. Von besonderem Vorteil der als Sattelflächen geformten Stegoberflächen ist die Tatsache, dass diese Sattelflächen die Wälzkörper entlang einer ausgedehnten Linie, die sich in Umfangsrichtung des Wälzkörpers erstreckt und einen Bogen eines Kreises beschreibt, dessen Rotationsachse mit der Rotationsachse der Kugel identisch ist, führen. Gleichzeitig bleibt neben diesen Führungslinien, welche in der Mittelebene des Kugellagerkäfigs liegen, zu den beiden Stirnseiten des Kugellagerkäfigs hin ausreichend Platz zur Aufnahme von Schmiermittel, welches auf kurzen Wegen zu den Kontaktbereichen zwischen Wälzkörper und Kugellagerkäfig gelangt.

Die stetig geschweifte, harmonische Übergänge aufweisende Form der Wälzkörpertaschen stellt insgesamt günstige Anlaufflächen zwischen Wäizkörper und Lagerkäfig bereit, wobei zugleich große Fetträume in Volumina unmittelbar um die Wälzkörper gebildet sind.

Der Kugellagerkäfig ist rationell aus Kunststoff, insbesondere faserverstärktem Kunststoff, herstellbar und beispielsweise zur Verwendung in einem Spindellager in einer Werkzeugmaschine geeignet. Bei dem Wälzlager, in welchem der Kugellagerkäfig zum Einsatz kommt, kann es sich beispielsweise um ein Rillenkugellager, ein Vierpunktlager oder ein Schrägkugellager handeln. In jedem Fall sind die Wälzkörper, nämlich Kugeln, durch die mehrfach konkav-konvexe Führungskontur jeder Wälzkörpertasche reibungsarm im Kugellagerkäfig geführt, wobei zugleich gute Schmierungsbedingungen, auch bei Fettschmierung, gegeben sind.

### Kurze Beschreibung der Zeichnungen

Eine bevorzugte Ausführungsform des erfindungsgemäß ausgebildeten Kugellagerkäfigs wird nachfolgend unter Bezugnahme auf die beigefügten Zeichnungen näher erläutert. Dabei zeigen:
- Figur 1: ausschnittsweise in Draufsicht ein Kugellager mit einem Kugellagerkäfig,
- Figur 2: den Kugellagerkäfig der Anordnung nach Figur 1 in einer Schnittdarstellung,
- Figur 3: den Kugellagerkäfig nach Figur 2 in einer geschnittenen perspektivischen Ansieht.

### Ausführliche Beschreibung der Zeichnungen

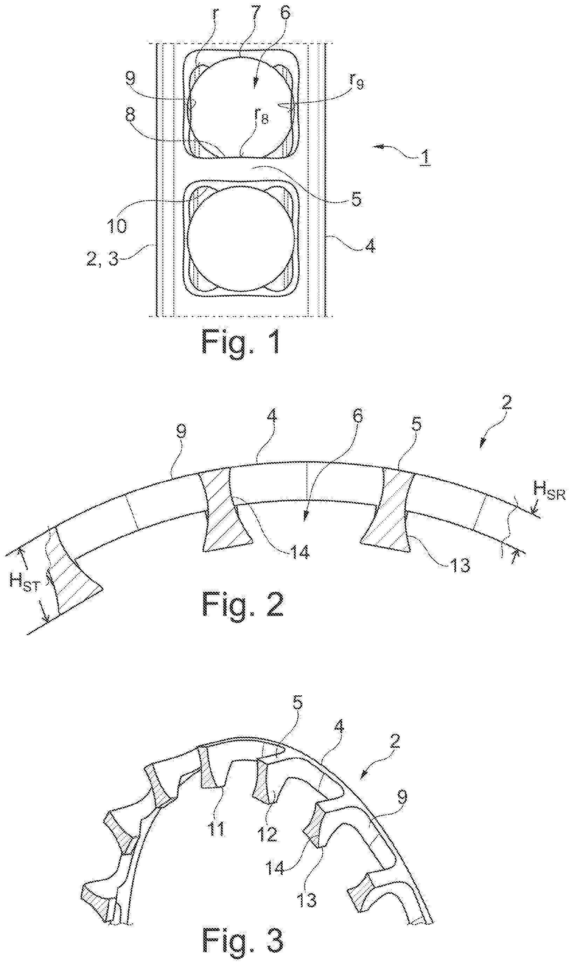

Die Figur 1 zeigt in einer Draufsicht in radialer Richtung ein insgesamt mit dem Bezugszeichen 1 gekennzeichnetes Wälzlager, nämlich Kugellager, mit einem Kugellagerkäfig 2, der als Fensterkäfig aus Kunststoff ausgebildet ist. Zwei Seitenringe 3, 4 des Kugellagerkäfigs 2 sind einstückig durch Stege 5 miteinander verbunden, welche in Axialrichtung des Wälzlagers 1 verlaufen. Jeweils zwischen zwei in Umfangsrichtung benachbarten Stegen 5 ist eine Wälzkörpertasche 6 zur Aufnahme eines Wälzkörpers 7, nämlich einer Kugel, gebildet. Jede Wälzkörpertasche 6 hat in der Ansicht nach Figur 1 die Grundform eines Quadrates mit abgerundeten Ecken, wobei ein Eckenradius mit r bezeichnet ist. Die vier Ecken der Wälzkörpertasche 6 sind durch Seitenkonturen 8, 9 miteinander verbunden. Hierbei sind zwei im Wesentlichen zueinander parallele Seitenkonturen 8 durch zwei Stege 5 gebildet, während die zwei weiteren, ebenfalls zueinander im Wesentlichen parallelen Seitenkonturen 9 der Wälzkörpertasche 6 durch die Seitenringe 3, 4 gebildet sind. Jede Seitenkontur 8, 9 weist eine, bezogen auf den Steg 5 beziehungsweise auf den Seitenring 3, 4, abgerundete nach außen gewölbte, das heißt konvexe Form auf. Dies bedeutet, dass sich jeder Steg 5, ausgehend von dessen Übergangsbereichen zu den Seitenringen 3, 4, zur Mitte des Steges 5 hin, das heißt zur Mittelebene des Kugellagerkäfigs 2 hin, verbreitert. In analoger Weise sind die Seitenringe 3, 4 in Umfangsrichtung mittig zwischen zwei benachbarten Stegen 5, das heißt in der Mitte einer Wälzkörpertasche 6, verbreitert. Die vier Seitenkonturen 8, 9 der Waizkörpertasche 6 beschreiben zusammen mit den abgerundeten Ecken der Wälzkörpertasche 6 eine geschlossene Kontur, die als Führungskontur 10 fungiert und in der radialen Draufsicht gemäß Figur 1 jeweils vier konvexe und konkave Bereiche aufweist. Der Krümmungsradius der konvexen Bereiche, das heißt der Seitenkonturen 8, 9, ist mit r₈ beziehungsweise r₉ bezeichnet. Im Ausführungsbeispiel sind die Krümmungsradien r₈, r₉ an den Stegen 5 beziehungsweise an den Seitenringen 3, 4 identisch und mindestens doppelt so groß wie der Eckenradius r an jeder Ecke der Wälzkörpertasche 6.

Von den Seitenringen 3, 4 aus erstrecken sich die Stege 5, wie insbesondere aus den Figur 2 und 3 hervorgeht, in Radialrichtung des Kugellagerkäfigs 2 nach innen. Die in Radialrichtung der Seitenringe 3, 4 und damit des gesamten Kugellagerkäfigs 2 gemessene Höhe eines jeden Stegs 5 ist mit H_{ST} bezeichnet und beträgt etwa das Doppelte der in der selben Richtung gemessenen, mit H_{SR} bezeichneten Seitenringhöhe der Seitenringe 3, 4.

Während die Stege 5 in dem Bereich, in den sie die Seitenringe 3, 4 nach innen überragen, in Umfangsrichtung des Kugellagerkäfigs 2 dicker werden, womit sie der Form der Kugeln 7 angepasst sind, nimmt die in Axialrichtung des Wälzlagers 1 gemessene Breite der Stege 5 von außen nach innen ab. Die innersten Punkte des Kugellagerkäfigs 2 sind durch Abrundungen 11 an den Stegen 5 gebildet, welche am besten in tangentialer Draufsicht auf einen Steg 5 erkennbar ist. Näherungsweise beschreibt die nach innen gewandte, das heißt der Wälzlagerachse zugewandte Kontur eines jeden Steges 5 in tangentialer Draufsicht auf den Steg 5 die Form eines U oder eines an seiner Spitze leicht abgerundeten V. Durch diese U- oder V-förmige Kontur und eine diese Kontur ausfüllende Oberfläche wird zusammen mit der Kontur am Außen umfang des Kugellagerkäfigs 2 an den beiden Umfangsseiten eines jeden Steges 5 jeweils eine Sattelfläche 12 beschrieben. Die in Radialrichtung innersten Punkte der Sattelflächen 12 stellen hierbei Haltevorsprünge 13 der Stege 5 dar. Von den Haltevorsprungen 13 bis zum Außenumfang des Kugellagerkäfigs 2 erstreckt sich an jeder Sattelfläche 12 eine Führungslinie 14, an welcher der Wälzkörper 7 anlaufen kann. Sämtliche Führungslinien 14 liegen in einer Ebene, welche mit der Mittelebene des Kugellagerkäfigs 2 identisch, das heißt mittig zwischen den beiden Stirnseiten des Kugellagerkäfigs 2 angeordnet ist. Die Führungslinien 14 befinden sich somit in Bereichen des Wälzlagers 1, in welchen die Relativgeschwindigkeit zwischen den Wälzkörpern 7 und dem Kugellagerkäfig 2 maximal ist, was zu einer raschen, gleichmäßigen Verteilung von Schmiermittel im Wälzlager 1 beiträgt. Hierbei wird Schmiermittel, insbesondere Fett, besonders aus Schmiermittelreservoirs, die sich in den Ecken der Wälzkörpertaschen 6 befinden, in die Kontaktbereiche zwischen den Wälzkörpern 7 und dem Kugellagerkäfig 2 gefördert.

### Bezugszeichenliste

- 1: Wälzlager
- 2: Kugellagerkäfig
- 3: Seitenring
- 4: Seitenring
- 5: Steg
- 6: Wälzkörpertasche
- 7: Wälzkörper, Kugel
- 8: Seitenkontur
- 9: Seitenkontur
- 10: Führungskontur
- 11: Abrundung
- 12: Sattelfläche
- 13: Haltevorsprung
- 14: Führungslinie

- H_{SR}: Seitenringhöhe
- H_{ST}: Steghöhe
- r: Eckenradius
- r₈: Krümmungsradius
- r₉: Krümmungsradius

## Patentansprüche

1. Kugellagerkäfig (2), mit zwei durch Stege (5) miteinander verbundenen Seitenringen (3, 4), wobei in Umfangsrichtung zwischen den Stegen (5) Wälzkörpertaschen (6) gebildet sind, die jeweils eine quadratische Grundform mit abgerundeten Ecken aufweisen, **dadurch gekennzeichnet dass** die Seitenringe (3, 4) zusammen mit den Stegen (5) eine Führungskontur (10) jeder Wälzkörpertasche (6) bilden, weiche zwischen deren Ecken vier konvexe, den Abrundungen in den Ecken entgegen gerichtete Seitenkonturen (8, 9) aufweist.

2. Kugellagerkäfig (2) nach Anspruch 1, **dadurch gekennzeichnet, dass** sich die Stege (5) radial weiter nach innen als die Seitenringe (3, 4) erstrecken.

3. Kugellagerkäfig (2) nach Anspruch 2, **dadurch gekennzeichnet, dass** sich jede Wälzköpertasche (6) radial nach innen verjüngt.

4. Kugellagerkäfig (2) nach Anspruch 3, **dadurch gekennzeichnet, dass** die in Radialrichtung der Seitenringe (3, 4) gemessene Höhe (H_{ST}) des Steges (5) mindestens das 1,5-fache und höchstens das 2,5-fache der in der selben Richtung gemessenen Seitenringhöhe (H_{SR}) beträgt.

5. Kugellagerkäfig (2) nach Anspruch 3 oder 4, **dadurch gekennzeichnet, dass** die in Axialrichtung der Seitenringe gemessene Breite des Steges (5) von außen nach innen abnimmt.

6. Kugellagerkäfig (2) nach Anspruch 5, **dadurch gekennzeichnet, dass** die Breite des Steges (5) an dessen innerem Rand maximal ein Viertel der Käfiggesamtbreite beträgt.

7. Kugellagerkäfig (2) nach Anspruch 6, **dadurch gekennzeichnet, dass** der innere Rand des Käfigs eine Abrundung (11) beschreibt.

8. Kugellagerkäfig (2) nach einem der Ansprüche 5 bis 7, **dadurch gekennzeichnet, dass** die den Wälzkörpertaschen (6) zugewandten Oberflächen des Steges (5) jeweils eine Sattelfläche (12) beschreiben.

9. Kugellagerkäfig (2) nach einem der Ansprüche 3 bis 8, **dadurch gekennzeichnet, dass** durch zwei in Umfangsrichtung benachbarte Stege (5) Haltevorsprünge (13) einer Walzkörpertasche (6) gebildet sind, welche in Radialrichtung der Seitenringe (3,4) weiter innen als die Führungskontur (10) der Wälzkörpertasche (6) angeordnet sind.

10. Verwendung eines Kugellagerkäfigs (2) nach Anspruch 1 in einem Spindellager, insbesondere einer Werkzeugmaschine.

## Claims

1. A ball bearing cage (2), with two side rings (3, 4) interconnected by webs (5), with rolling body pockets (6) being formed in a circumferential direction between the webs (5), each having a square basic shape with rounded corners, **characterised in that** the side rings (3, 4), together with the webs (5), form a guide contour (10) of each rolling body pocket (6) which comprises between the corners thereof four convex side contours (8, 9) opposing the rounding in the corners.

2. The ball bearing cage (2) according to claim 1, **characterised in that** the webs (5) extend radially further inward than the side rings (3, 4).

3. The ball bearing cage (2) according to claim 2, **characterised in that** each rolling body pocket (6) tapers radially inward.

4. The ball bearing cage (2) according to claim 3, **characterised in that** the height (H_{ST}) of the web (5) measured in the radial direction of the side rings (3, 4) is at least 1.5 times and at most 2.5 times the height (H_{SR}) of the side ring measured in the same direction.

5. The ball bearing cage (2) according to claim 3 or 4, **characterised in that** the width of the web (5) measured in the axial direction of the side rings decreases from outside to inside.

6. The ball bearing cage (2) according to claim 5, **characterised in that** the width of the web (5) at the inner edge thereof is a maximum of one-quarter of the total cage width.

7. The ball bearing cage (2) according to claim 6, **characterised in that** the inner edge of the cage delineates a rounding (11).

8. The ball bearing cage (2) according to one of claims 5 through 7, **characterised in that** surfaces of the web (5) facing the rolling body pockets (6) each delineate a saddle surface (12).

9. The ball bearing cage (2) according to one of claims 3 through 8, **characterised in that** holding projections (13) of a rolling body pocket (6) are formed by two circumferentially adjacent webs (5), which are arranged further inward in the radial direction of the side rings (3, 4) than the guide contour (10) of the rolling body pocket (6).

10. A use of a ball bearing cage (2) according to claim 1 in a spindle bearing, in particular of a machine tool.

## Revendications

1. Cage pour roulement à billes (2), comprenant deux bagues latérales (3, 4), reliées l'une à l'autre par des éléments de liaison (5), dans le sens périphérique, entre les éléments de liaison (5), étant formées des alvéoles de corps de roulement (6), qui présentent chacune une forme de base carrée à coins arrondis, **caractérisée en ce que** les bagues latérales (3, 4) forment, conjointement avec les éléments de liaison (5), un contour de guidage (10) de chaque alvéole de corps de roulement (6), qui présente entre ses coins quatre contours latéraux convexes (8, 9) orientés à l'opposé des arrondis dans les coins.

2. Cage pour roulement à billes (2) selon la revendication 1, **caractérisée en ce que** les éléments de liaison (5) s'étendent radialement davantage à l'intérieur que les bagues latérales (3, 4).

3. Cage pour roulement à billes (2) selon la revendication 2, **caractérisée en ce que** chaque alvéole de corps de roulement (6) se rétrécit radialement vers l'intérieur.

4. Cage pour roulement à billes (2) selon la revendication 3, **caractérisée en ce que** dans le sens radial des bagues latérales (3, 4), la hauteur mesurée (H_{ST}) de l'élément de liaison (5) est d'au moins 1,5 fois et d'au plus 2,5 fois la hauteur de bague latérale (H_{SR}) mesurée dans le même sens.

5. Cage pour roulement à billes (2) selon la revendication 3 ou 4, **caractérisée en ce que** la largeur mesurée dans le sens axial des bagues latérales de l'élément de liaison (5) diminue de l'extérieur vers l'intérieur.

6. Cage pour roulement à billes (2) selon la revendication 5, **caractérisée en ce que** la largeur de l'élément de liaison (5) au niveau de son bord intérieur correspond au maximum à un quart de la largeur totale de la cage.

7. Cage pour roulement à billes (2) selon la revendication 6, **caractérisée en ce que** le bord intérieur de la cage décrit un arrondi (11).

8. Cage pour roulement à billes (2) selon l'une des revendications 5 à 7, **caractérisée en ce que** les surfaces de l'élément de liaison (5) tournées vers les alvéoles de corps de roulement (6) décrivent chacune une surface de collerette (12).

9. Cage pour roulement à billes (2) selon l'une des revendications 3 à 8, **caractérisée en ce que** sont formées, par deux éléments de liaison (5) voisins dans le sens périphérique, des saillies de retenue (13) d'une alvéole de corps de roulement (6) qui sont disposées, dans le sens radial des bagues latérales (3, 4), davantage vers l'intérieur que le contour de guidage (10) de l'alvéole de corps de roulement (6).

10. Utilisation d'une cage pour roulement à billes (2) selon la revendication 1 dans un roulement de broche, en particulier d'une machine-outil.
